# EUROPÄISCHE PATENTANMELDUNG

(11) **EP 4 641 320 A1**
(43) Veröffentlichungstag der Anmeldung: **29.10.2025**
(21) Anmeldenummer: 24172503.5
(22) Anmeldetag: 25.04.2024
(51) Int. Cl.: G05B 13/02, G05B 13/04, G05B 17/02

(54) **VERFAHREN UND EINRICHTUNG ZUR BEREITSTELLUNG EINER STEUERUNG EINES PRODUKTIONSSYSTEMS**

(71) Anmelder: Siemens Aktiengesellschaft, 80333 München (DE)
(72) Erfinder: Bischoff, Martin, 85653 Aying, Großhelfendorf (DE); Körwer, Niklas, 51065 Köln (DE)
(74) Vertreter: Siemens Patent Attorneys

(57) **Zusammenfassung**

Es wird ein Verfahren zur Bereitstellung einer Steuerung eines Produktionssystem vorgeschlagen, umfassend die Schritte:
a.) Bereitstellung einer Trainingsumgebung für ein Modell des maschinellen Lernens umfassend eine Simulation des zu steuernden Produktionssystems;
b.) Vorgabe eines Sollwerts für eine technische Größe innerhalb des simulierten Produktionssystems und Erfassung einer resultierenden zeitlichen Änderung der technischen Größe als Ausgangssignal;
c.) Erfassung von Überschwingen und/oder Anstiegszeit und/oder Totzeit und/oder Einschwingzeit als regelungstechnische Metriken des Ausgangssignals;
d.) Training des Modells innerhalb der Simulation unter Einsatz der Methode des bestärkenden Lernens, wobei für die Bereitstellung eines benötigten Markov-Zustands, wenigstens der in Schritt b gewählte Sollwert und die Metriken des Ausgangssignals für das Training dienen;
e.) Variation des Systemverhaltens in der Simulation für eine nächste Simulationsepoche und erneute Durchführung der Schritte b, c und d, bis die aus c erfassten Metriken des Aussignals für die simulierten Varianten des Systemverhaltens systemspezifische Grenzwerte einhalten, wobei das Modell im Schritt b einen neuen Sollwert angibt und die Variation des Systemverhaltens auf der Auswahl von vordefinierten Parametersätzen aus einer Datenbank basiert; und
f.) Integration des trainierten Modells in das Produktionssystem, wobei durch das Modell eine Steuerungsaufgabe für die Vorgabe wenigstens eines Sollwerts übernommen wird.

Weiterhin betrifft die Erfindung eine Einrichtung zur Steuerung eines Produktionssystems.

## Beschreibung

Die Erfindung betrifft ein Verfahren gemäß dem Oberbegriff des Patentanspruches 1 sowie eine Einrichtung gemäß dem Oberbegriff des Patentanspruches 7.

In industriellen Anwendungen gibt es viele verschiedene Systeme, die von Elektromotoren angetrieben werden und präzise gesteuert werden müssen. Beispiele sind angetriebene Bandsysteme, kartesische Portale, Roboterarme und viele mehr. Alle diese Systeme haben ein unterschiedliches dynamisches Verhalten, das zusammen mit dem Verhalten des Antriebssystems eine spezifische Systemreaktion auf Änderungen des Sollwerts, z. B. einen Bewegungsbefehl für eine Achse eines kartesischen Portals, erzeugt. Um den Zielsollwert genau zu treffen, gibt es viele in der Regelungstheorie erforschte Methoden, die es uns ermöglichen, PID-Regelkreise einzurichten, um das gewünschte dynamische Verhalten des Gesamtsystems zu erreichen. Diese Methoden sind jedoch sehr komplex und lassen sich nur schwer verallgemeinern. Dies wird zu einem Problem, wenn man bedenkt, dass Maschinenbauer in der Regel nicht genau dieselbe Maschine zweimal bauen. So wird z. B. ein anderer Motor oder ein anderer Frequenzumrichter verwendet, z. B. aufgrund eines Lieferengpasses oder weil der Endkunde bestimmte Produkte oder Hersteller bevorzugt. Bei Hochpräzisionsmaschinen können selbst kleine Unterschiede große Auswirkungen haben, z. B. unterschiedliche Umgebungsbedingungen wie Feuchtigkeit oder Temperatur. Daher müssen viele Maschinen manuell an kleine Änderungen angepasst werden, und zwar von geschultem Personal, das eine PID-Einstellung der Maschine vornimmt, sobald diese fertig montiert und in Betrieb genommen ist. Dies kann ein langwieriger und kostspieliger Prozess sein, der aufgrund von Zeitmangel oder Maschinenbeschränkungen nicht immer zu den bestmöglichen Ergebnissen führt.

Der vorliegenden Erfindung liegt die Aufgabe zugrunde, eine auf ein regelungstechnisches Systemverhalten eines Produktionssystems spezifische Steuerung bereitzustellen.

Die Aufgabe wird durch ein Verfahren mit den Merkmalen des unabhängigen Patentanspruches 1 und durch eine Einrichtung mit den Merkmalen des unabhängigen Patentanspruches 7 gelöst. In den abhängigen Patentansprüchen sind vorteilhafte Ausgestaltungen und Weiterbildungen der Erfindung angegeben.

Das erfindungsgemäße Verfahren zur Bereitstellung einer Steuerung eines Produktionssystems, erfolgt durch die Schritte:
a.) Bereitstellung einer Trainingsumgebung für ein Modell des maschinellen Lernens umfassend eine Simulation des zu steuernden Produktionssystems;
b.) Vorgabe eines Sollwerts für eine technische Größe innerhalb des simulierten Produktionssystems und Erfassung einer resultierenden zeitlichen Änderung der technischen Größe als Ausgangssignal;
c.) Erfassung von Überschwingen und/oder Anstiegszeit und/oder Totzeit und/oder Einschwingzeit als regelungstechnische Metriken des Ausgangssignals;
d.) Training des Modells innerhalb der Simulation unter Einsatz der Methode des bestärkenden Lernens, wobei für die Bereitstellung eines benötigten Markov-Zustands, wenigstens der in Schritt b gewählte Sollwert und die Metriken des Ausgangssignals für das Training dienen;
e.) Variation des Systemverhaltens in der Simulation für eine nächste Simulationsepoche und erneute Durchführung der Schritte b, c und d, bis die aus c erfassten Metriken des Aussignals für die simulierten Varianten des Systemverhaltens systemspezifische Grenzwerte einhalten, wobei das Modell im Schritt b einen neuen Sollwert angibt und die Variation des Systemverhaltens auf der Auswahl von vordefinierten Parametersätzen aus einer Datenbank basiert;
f.) Integration des trainierten Modells in das Produktionssystem, wobei durch das Modell eine Steuerungsaufgabe für die Vorgabe wenigstens eines Sollwerts übernommen wird.

Die Trainingsumgebung kann rein virtuell ausgebildet sein und kann Werkzeuge und Ansätze für die Erzeugung und Bereitstellung von synthetischen Daten für Test und Training von Modellen des maschinellen Lernens umfassen, insbesondere die Durchführung von Simulationen unter Einsatz der genannten Daten ist Teil des Funktionsumfangs einer solchen Trainingsumgebung.

Die Simulation kann Bestandteil der Trainingsumgebung sein und kann der hinreichend realistischen Simulation des Produktionssystems dienen. In diesem Kontext kann die Simulation einen digitalen Zwilling aus den Projektierungsdaten des Produktionssystems abbilden.

Eine technische Größe, im Zusammenhang mit Produktionssystemen, für die ein Sollwert vorgegeben werden kann, kann insbesondere bei der Ansteuerung von Fördertechniken, die Geschwindigkeit eines Förderbandes sein. Ein weiteres Beispiel für eine technische Größe kann die Stromaufnahme einer Antriebstechnik sein.

Das Produktionssystem kann aus einer einzelnen Maschine oder aus einem Verbund von Maschinen (auch Produktionslinie genannt) bestehen.

Reglungstechnische Metriken können Überschwingen, Anstiegszeit, Totzeit und Einschwingzeit eines Signalverlaufs sein, diese Metriken ermöglichen insbesondere die Untersuchung von Signalen und der Einstellung von PID-Regler-Parameter mit Verfahren wie nach Ziegler-Nichols und Cohen-Coon.

Der Begriff Markov-Zustand beschreibt insbesondere die Untersuchung des Zusammenhangs zwischen dem eingegebenen Sollwert bzw. einer korrespondierenden Eingangsfunktion und dem resultierenden Ausgangssignal, wobei das Ergebnis der Analyse des Ausgangssignals für die Einstellung eines neuen Sollwerts dienen kann.

Die Integration eines trainierten Modells des maschinellen Lernens, kann insbesondere durch Speicherung auf einer elektronischen Steuerung erfolgen. Hierbei können weitere Maßnahmen ergriffen werden, insbesondere die Anpassung von Projektierungsdaten der Steuerung oder Herstellung einer Internetverbindung.

Die elektronische Steuerung eines Produktionssystems kann insbesondere eine speicherprogrammierbare Steuerung oder als industrieller Computer sein.

Durch die vorliegende Erfindung wird vorteilhafterweise der manuelle Vorgang von Try-and-Error für die Einstellung von PID-Regler-Parametern vermieden. Das ist deshalb der Fall, weil die elektronische Steuerung des Produktionssystems mittels des trainierten Modells einen Sollwert passend zum spezifischen Systemverhalt des Produktionssystems berechnet.

Die erfindungsgemäße Einrichtung zur Steuerung eines Produktionssystem, die ein Modell des maschinellen Lernens (1) mit einer Simulation des zu steuernden Produktionssystems (9) aufweist, derart ausgestaltet, dass durch das Modell eine Steuerungsaufgabe für die Vorgabe wenigstens eines Sollwerts übernommen wird, wobei das Modell des maschinellen Lernens (1) mittels der folgenden Schritte trainiert wird:
a.) Bereitstellung einer Trainingsumgebung (12) für ein Modell des maschinellen Lernens (1) umfassend eine Simulation des zu steuernden Produktionssystems (9);
b.) Vorgabe eines Sollwerts (5) für eine technische Größe innerhalb des simulierten Produktionssystems (9) und Erfassung einer resultierenden zeitlichen Änderung der technischen Größe als Ausgangssignal (6);
c.) Erfassung von Überschwingen und/oder Anstiegszeit und/oder Totzeit und/oder Einschwingzeit als regelungstechnische Metriken des Ausgangssignals (6);
d.) Training des Modells innerhalb der Simulation (9) unter Einsatz der Methode des bestärkenden Lernens, wobei für die Bereitstellung eines benötigten Markov-Zustands, wenigstens der in Schritt b gewählte Sollwert und die Metriken des Ausgangssignals für das Training dienen;
e.) Variation des Systemverhaltens in der Simulation für eine nächste Simulationsepoche und erneute Durchführung der Schritte b, c und d, bis die aus c erfassten Metriken des Aussignals für die simulierten Varianten des Systemverhaltens systemspezifische Grenzwerte einhalten, wobei das Modell (1) im Schritt b einen neuen Sollwert angibt und die Variation des Systemverhaltens auf der Auswahl von vordefinierten Parametersätzen aus einer Datenbank (10) basiert.

Durch die vorliegende Erfindung wird vorteilhafterweise der zeitintensive Aufbau eines realen Produktionssystems und die Veränderung dessen Systemverhaltens für das Training des Modells vermieden.

Gemäß einer vorteilhaften Ausgestaltung kann die Auswahl von vordefinierten Parametersätze in Schritt e aus einer Datenbank, umfassend Informationen zu verwendeten Typen von Motoren und/oder Frequenzumrichtern und/oder Getriebearten und/oder zugelassene Beschleunigungswerte bereitgestellt werden.

Durch die Bereitstellung dieser sehr produktspezifischen Daten können realitätsnahe Variation des Systemverhaltens erzielt werden, was auch die Gesamtzahl möglicher Variationen verkleinert, da unrealistische oder unübliche Variationen vernachlässigt werden können. Dies führt auch zu einem tendenziell geringeren Zeitaufwand für das Training und die Durchführung der Simulation.

In einer vorteilhaften Weiterbildung der Erfindung kann die Eingabe des Sollwerts in Schritt b durch das Anlegen einer Sprungfunktion bereitgestellt werden.

Das Anlegen einer Sprungfunktion ermöglicht vorteilhafterweise die Untersuchung des Einschwingverhaltens des Produktionssystems, insbesondere das Einschwingen, bis ein bestimmter Sollwert erreicht wird kann vorteilhafterweise untersucht werden.

Gemäß einer vorteilhaften Ausgestaltung können für eine Korrelation zwischen Sollwert und Ausgangssignal eine Mehrzahl von voneinander verschiedenen Größen genutzt werden.

Diese Art der gemeinsamen Auswertung und in Beziehung Setzung von verschiedenen technischen Größen für Eingabewert und dem abhängigen Ausgangssignal von einem zu untersuchenden System, kann vorteilhaft genutzt werden, wenn das Produktionssystem keinen Messpunkt für dieselbe technische Größe wie für den Sollwert besitzt. Ein Beispiel hierfür wäre die Eingabe einer Bandgeschwindigkeit als Sollwert und die Auswertung einer resultierenden Stromaufnahme der Antriebstechnik als Ausgangssignal.

In einer vorteilhaften Weiterbildung der Erfindung kann die Integration des Modells in das Produktionssystem aus Schritt f durch ein Einspielen des Modells in eine Einrichtung für die Steuerung des Produktionssystems bereitgestellt werden.

Die Integration des Modells in der elektronischen Steuerung des Produktionssystems ermöglicht durch kürzere Signallaufzeiten ein bessere Zeitverhalten des Produktionssystems, insbesondere das weiche Echtzeitverhalten des Systems kann profitieren.

Gemäß einer vorteilhaften Ausgestaltung kann das Modell von einem Server als Download bereitgestellt werden, wobei der Download durch die elektronische Steuerung des Produktionssystems gestartet wird.

Die Bereitstellung als Download direkt auf die elektronische Steuerung des Produktionssystems ermöglicht ein schnelleres Update des trainierten Models, wobei vorteilhafterweise auf einen manuellen Eingriff verzichtet werden kann.

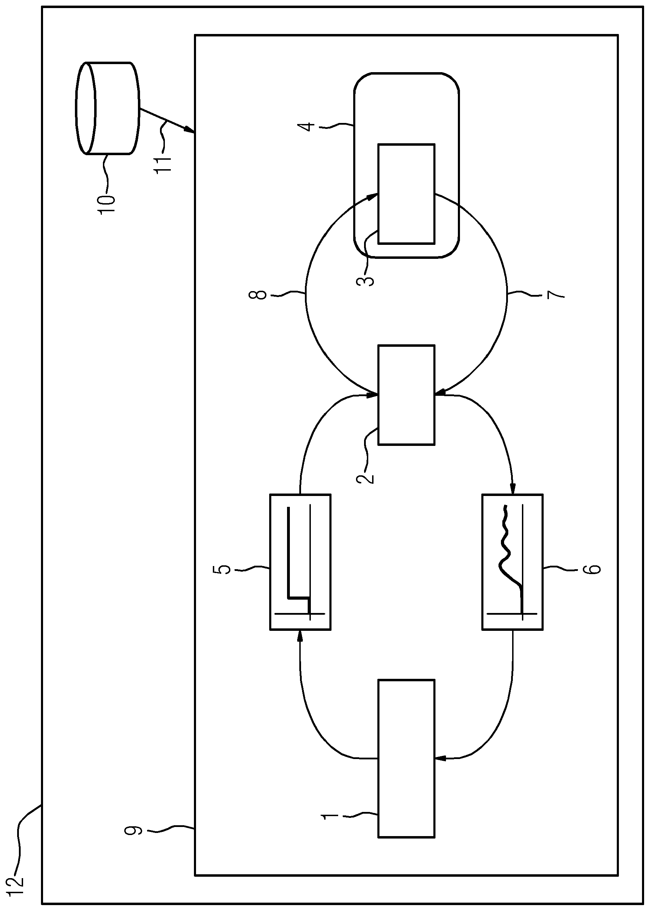

Weitere Vorteile, Merkmale und Einzelheiten der Erfindung ergeben sich aus den im Folgenden beschriebenen Ausführungsbeispielen sowie anhand der Zeichnung. Dabei zeigt schematisiert die Figur eine Trainingsumgebung für ein Modell des maschinellen Lernens.

Die Figur zeigt schematisch eine Trainingsumgebung 12 umfassend eine Datenbank mit Parametersätzen 10 und die Simulationsumgebung für das Produktionssystem 9. Durch einen Übertragungskanal können Parameter aus der Datenbank 10 in die Simulationsumgebung 9 geladen werden.

Gemäß der vorliegenden Ausgestaltung wird als Produktionssystem ein Förderband 4 simuliert. Das Förderband 4 umfasst einen Motor mit Drehencoder 3, einen Frequenzumrichter 2 und eine elektronische Steuerung mit dem Modell des maschinellen Lernens 1.

Die so simulierte Übertragung des Sollwerts für eine technische Größe als Sprungfunktion 5 erfolgt zwischen der elektronischen Steuerung 1 und dem Frequenzumrichter 2. Unter Einbezug des Sollwerts realisiert der Frequenzumrichter eine Energieübertragung auf den Motor 8 um das Förderband 4 anzutreiben.

Der simulierte Motor 3 besitzt einen Drehencoder der während des Betriebs des Förderbands 4 die Drehzahl des Motors 3 erfasst und diese mit weiteren Daten an den Frequenzumrichter überträgt 7.

In der laufenden Simulation überträgt der Frequenzumrichter 2 die zeitliche Änderung des Ausgangssignals 6, welches aus der Eingabe des Sollwerts resultiert 5.

### Bezugszeichenliste

- 1: Elektronische Steuerung mit Modell des maschinellen Lernens
- 2: Frequenzumrichter
- 3: Motor mit Drehencoder
- 4: Förderband
- 5: Übertragung des Sollwerts für eine technische Größe als Sprungfunktion
- 6: Übertragung der aus der Eingabe des Sollwerts resultierenden zeitlichen Änderung der technischen Größe als Ausgangssignal
- 7: Übertragung von Drehzahl und ggf. weiteren Parametern aus dem Motor an den Frequenzumrichter
- 8: Energieübertragung, um den Motor anzutreiben
- 9: Simulation des Produktionssystems
- 10: Datenbank mit Parametersätzen
- 11: Übertragung von Parametersätzen in die Simulation, um das Systemverhalten zu beeinflussen
- 12: Trainingsumgebung

## Patentansprüche

1. Verfahren zur Bereitstellung einer Steuerung eines Produktionssystem umfassend die Schritte:
a.) Bereitstellung einer Trainingsumgebung (12) für ein Modell des maschinellen Lernens (1) umfassend eine Simulation des zu steuernden Produktionssystems (9);
b.) Vorgabe eines Sollwerts (5) für eine technische Größe innerhalb des simulierten Produktionssystems (9) und Erfassung einer resultierenden zeitlichen Änderung der technischen Größe als Ausgangssignal (6);
c.) Erfassung von Überschwingen und/oder Anstiegszeit und/oder Totzeit und/oder Einschwingzeit als regelungstechnische Metriken des Ausgangssignals (6);
d.) Training des Modells innerhalb der Simulation (9) unter Einsatz der Methode des bestärkenden Lernens, wobei für die Bereitstellung eines benötigten Markov-Zustands, wenigstens der in Schritt b gewählte Sollwert und die Metriken des Ausgangssignals für das Training dienen;
e.) Variation des Systemverhaltens in der Simulation für eine nächste Simulationsepoche und erneute Durchführung der Schritte b, c und d, bis die aus c erfassten Metriken des Aussignals für die simulierten Varianten des Systemverhaltens systemspezifische Grenzwerte einhalten, wobei das Modell (1) im Schritt b einen neuen Sollwert angibt und die Variation des Systemverhaltens auf der Auswahl von vordefinierten Parametersätzen aus einer Datenbank (10) basiert; und
f.) Integration des trainierten Modells in das Produktionssystem, wobei durch das Modell eine Steuerungsaufgabe für die Vorgabe wenigstens eines Sollwerts übernommen wird.

2. Verfahren gemäß Anspruch 1, **dadurch gekennzeichnet, dass** die Auswahl von vordefinierten Parametersätze in Schritt e aus einer Datenbank (10), umfassend Informationen zu verwendeten Typen von Motoren und/oder Frequenzumrichtern und/oder Getriebearten und/oder zugelassene Beschleunigungswerte bereitgestellt (11) wird.

3. Verfahren gemäß Anspruch 1, **dadurch gekennzeichnet, dass** die Eingabe des Sollwerts in Schritt b durch das Anlegen einer Sprungfunktion bereitgestellt wird.

4. Verfahren gemäß Anspruch 1, **dadurch gekennzeichnet, dass** für eine Korrelation zwischen Sollwert und Ausgangssignal eine Mehrzahl von voneinander verschiedenen Größen genutzt wird.

5. Verfahren gemäß Anspruch 1, **dadurch gekennzeichnet, dass** die Integration des Modells in das Produktionssystem aus Schritt f durch ein Einspielen des Modells in eine Einrichtung für die Steuerung des Produktionssystems bereitgestellt wird.

6. Verfahren gemäß Anspruch 5, **dadurch gekennzeichnet, dass** das Modell von einem Server als Download bereitgestellt werden, wobei der Download durch die elektronische Steuerung des Produktionssystems gestartet wird.

7. Einrichtung zur Steuerung eines Produktionssystem, die ein Modell des maschinellen Lernens (1) mit einer Simulation des zu steuernden Produktionssystems (9) aufweist, derart ausgestaltet, dass durch das Modell eine Steuerungsaufgabe für die Vorgabe wenigstens eines Sollwerts übernommen wird, wobei das Modell des maschinellen Lernens (1) mittels der folgenden Schritte trainiert wird:
a.) Bereitstellung einer Trainingsumgebung (12) für ein Modell des maschinellen Lernens (1) umfassend eine Simulation des zu steuernden Produktionssystems (9);
b.) Vorgabe eines Sollwerts (5) für eine technische Größe innerhalb des simulierten Produktionssystems (9) und Erfassung einer resultierenden zeitlichen Änderung der technischen Größe als Ausgangssignal (6);
c.) Erfassung von Überschwingen und/oder Anstiegszeit und/oder Totzeit und/oder Einschwingzeit als regelungstechnische Metriken des Ausgangssignals (6);
d.) Training des Modells innerhalb der Simulation (9) unter Einsatz der Methode des bestärkenden Lernens, wobei für die Bereitstellung eines benötigten Markov-Zustands, wenigstens der in Schritt b gewählte Sollwert und die Metriken des Ausgangssignals für das Training dienen;
e.) Variation des Systemverhaltens in der Simulation für eine nächste Simulationsepoche und erneute Durchführung der Schritte b, c und d, bis die aus c erfassten Metriken des Aussignals für die simulierten Varianten des Systemverhaltens systemspezifische Grenzwerte einhalten, wobei das Modell (1) im Schritt b einen neuen Sollwert angibt und die Variation des Systemverhaltens auf der Auswahl von vordefinierten Parametersätzen aus einer Datenbank (10) basiert.
